# EUROPEAN PATENT SPECIFICATION

(11) **EP 1 142 773 B1**
(45) Date of publication and mention of the grant of the patent: **24.01.2007**
(21) Application number: 01200966.8
(22) Date of filing: 15.03.2001
(51) Int. Cl.: B62D 5/09, B62D 5/093

(54) **Hydraulic steering system**
Hydraulisches Lenksystem
Système de direction hydraulique

(30) Priority: 04.04.2000 IT BO000188
(43) Date of publication of application: 10.10.2001
(60) Divisional application: 06121394.8
(73) Proprietor: CNH Italia S.p.A., 41100 Modena (IT)
(72) Inventor: Biggi, Massimo, 54033 Carrara (MS) (IT); Sedoni, Enrico, 41100 Modena (IT); Gregorio, Angelo, 41010 Modena (IT)
(74) Representative: Vandenbroucke, Alberic

(56) References cited:
- DE-A- 2 443 657
- DE-A- 19 714 785
- DE-C- 19 546 942
- DE-C1- 19 546 733
- GB-A- 2 339 178

## Description

The present invention relates to a hydraulic steering system, which, in particular, advantageously may be used on agricultural machines, earthmoving machines, or any loading and unloading machine in general.

The system according to the present invention may be used in conjunction with steering systems featuring hydraulic steering motors.

As is known, steering action consists in selecting the turning direction (right or left), the turning angle (how many degrees each wheel is to be turned with respect to an initial vertical wheel plane), and the speed with which the turning angle is achieved, all of which may be performed by the operator using, for example, a steering wheel connected to a hydraulic steering motor.

In certain operating conditions of the machines referred to above, the operator is forced to turn the steering wheel rapidly to turn the vehicle as quickly as possible.

It should be pointed out that, in this context, the term "conventional mode" is intended to mean any wheel steering action performed using a steering wheel, a hydraulic steering motor, and a hydraulic steering actuating device, and is normally performed by the operator during normal use of the vehicle, and in particular at fairly high vehicle travelling speeds.

"Fast mode", on the other hand, is intended to mean a steering mode in which the hydraulic steering motor is in some way bypassed and pressurized oil is fed directly to the steering actuating device. This second mode is designed to reduce the effort required of the operator, especially when manoeuvring the vehicle in the farm yard, when making tight U-turns at the end of a field, or in loading applications. In all these situations, "conventional mode" would call for strenuous, continuous and fast operation of the steering wheel.

In certain recent solutions, to permit easier handling of the steering system, "joysticks" have been provided, which are separate from the steering wheel and are activated by the operator when there is a need to switch from "conventional" to "fast mode" steering.

Joystick devices, however, disconnect the steering wheel completely from the "fast mode" device.

DE-A-197.14.785 shows a steering device having a "conventional" steering mode in which a steering wheel determines the position of a valve for sending pressurized fluid from a pump to a steering cylinder. Upon failure of the pump to provide a sufficient oil pressure, other valves directly connect the steering wheel to the steering cylinder. In this arrangement, the steering speed is not proportional to the steering force on the steering wheel, according to the preamble of claim 1.

The main object of the present invention is therefore to provide a steering device for rapidly activating the steering cylinders, but still using the steering wheel as a steering control device in terms of direction, angle and speed.

It is a further object of the present invention to provide a fast steering system where the "fast mode" can only be implemented at low vehicle travelling speeds.

A further object of the present invention is to provide a "fast mode" control device located on the vehicle steering wheel itself.

According to the present invention, there is provided a hydraulic steering system as claimed in Claim 1.

A number of non-limiting embodiments of the present invention will now be described by way of example, with reference to the accompanying drawings, in which:
Figure 1 shows a first embodiment of a hydraulic steering system, with an open-center hydraulic steering motor, in accordance with the present invention and in which steering is performed using the steering wheel, the system being shown in the "conventional mode" configuration;
Figure 2 shows the same system as in Figure 1, with an open-center hydraulic steering motor, but with fast-turn means engaged by the operator to perform a "fast turn" in a first direction;
Figure 3 shows the same system as in Figures 1 and 2, with an open-center hydraulic steering motor, but with the fast-turn means engaged by the operator to perform a "fast turn" in a second direction opposite to the first;
Figure 4 shows a second embodiment of a hydraulic steering system, with a closed-center hydraulic steering motor, in accordance with the present invention and in which steering is performed using the steering wheel, the system being shown in the "normal turn" configuration; and
Figure 5 shows a third embodiment of the system according to the present invention.

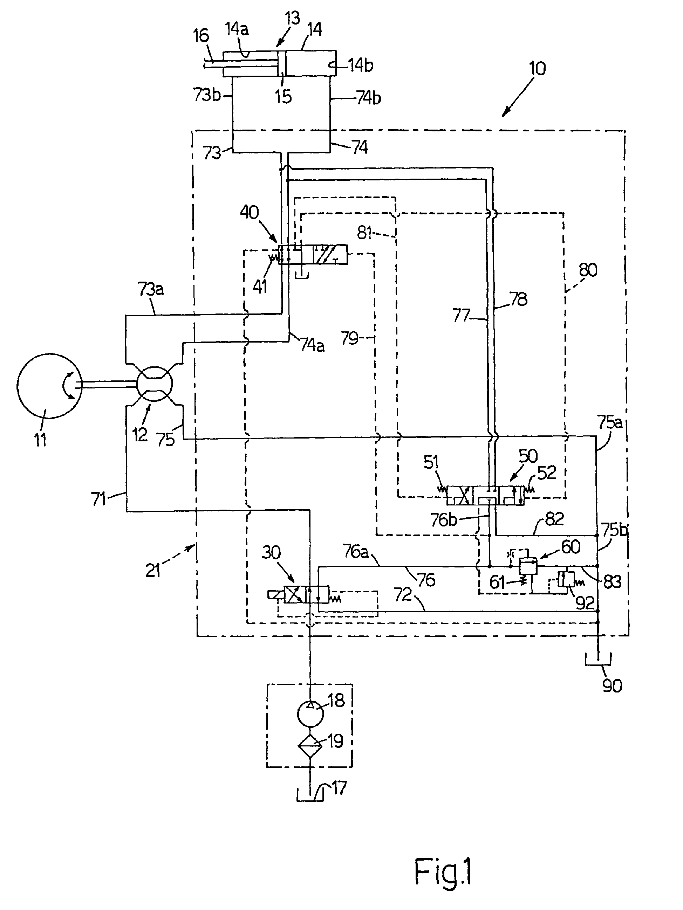

Number 10 in Figure 1 indicates a hydraulic steering system according to a first embodiment of the present invention. More specifically, as will be seen, hydraulic system 10 in Figure 1 comprises an open-center hydraulic steering motor. System 10 comprises a steering wheel 11, which, when turned one way or the other by an operator (not shown), turns two wheels (not shown) as described in detail further on.

Steering wheel 11 is connected by known means to an open-center conventional hydraulic steering motor 12, which in every respect may be considered a rotary selecting device for feeding a pressurized fluid - in the present case, oil - to an actuating device 13 for turning the wheels. Actuating device 13 comprises, in known manner, a cylinder 14 divided into two chambers 14a, 14b by a piston 15 having a rod 16. By feeding pressurized oil into chamber 14a or 14b, as described in detail later on, rod 16 is withdrawn or extended to turn the two wheels in one direction or the other.

As already mentioned, conventional steering action consists in selecting a turning direction (right or left), a turning angle (how many degrees each wheel is to be turned with respect to an initial vertical wheel plane), and the speed with which the turning angle is reached.

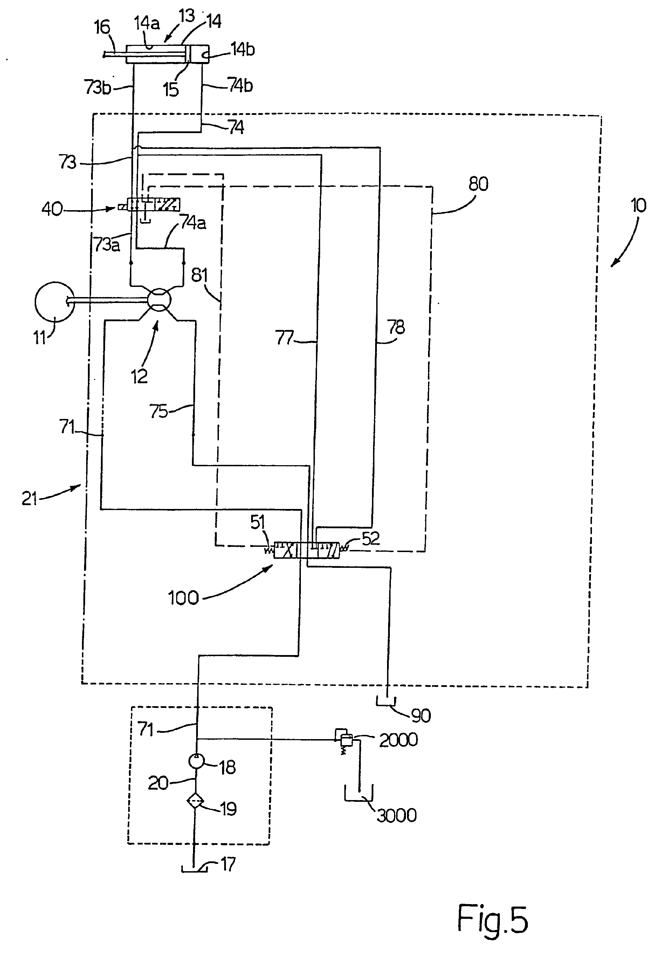

The oil for activating the various devices comes from a tank 17, is fed through a filter 19 along an intake conduit 20 (referenced only in figure 5), and is pumped by a pump 18 to a circuit 21 and to actuating device 13. Apart from open-center hydraulic steering motor 12, hydraulic circuit 21 also comprises a split valve 30, a change valve 40, a distributor 50, a pressure compensator 60, and a number of pressurized-oil supply conduits described one by one with reference to the operation of hydraulic system 10.

Pressurized oil is fed into circuit 21 along a delivery conduit 71 for supplying hydraulic steering motor 12. Oil flow along delivery conduit 71 is controlled by valve 30, which is a conventional 4/2 hydraulic valve, i.e. a "four-way, two-position" type valve. In the Figure 1 configuration, system 10 provides for "conventional turning" as defined previously.

In the Figure 1 operating position, split valve 30, as stated, permits pressurized-oil feed to open-center hydraulic steering motor 12 along conduit 71. Change valve 40 - which may also be considered a hydraulic 7/2, i.e. seven-way, two-position, valve - permits pressurized-oil flow to actuating device 13 along a conduit 73 or a conduit 74, as controlled by open-center hydraulic steering motor 12.

Change valve 40 divides conduit 73 into two portions 73a, 73b, and conduit 74 into two portions 74a, 74b.

Consequently, by turning steering wheel 11 and appropriately positioning open-center hydraulic steering motor 12, the operator supplies pressurized oil either to chamber 14a of cylinder 14 along conduit 73, or to chamber 14b along conduit 74. Obviously, when chamber 14a is supplied with pressurized oil, rod 16 is withdrawn inside cylinder 14, whereas, when oil is fed into chamber 14b, rod 16 is extended outwards, so as to turn the two wheels as required, i.e. either left or right.

It should be pointed out that, besides directing oil flow to conduit 73 or 74, as described above, hydraulic steering motor 12 also provides, in emergency manual steering conditions, i.e. in the event of failure of the hydraulic pump 18, for pumping the oil mechanically, this pumping action being performed by the operator turning the steering wheel 11.

When oil is fed into chamber 14a, the oil in chamber 14b is fed back along conduit 74, through change valve 40, which is still in the Figure 1 position, through hydraulic steering motor 12, and along a drain conduit 75 into a tank 90, possibly the same as tank 17. Drain conduit 75 may be thought of as comprising two portions 75a, 75b.

What is described above is the "conventional mode", i.e. the mode in which actuating device 13 is activated directly by the operator using steering wheel 11 and hydraulic steering motor 12, and in which steering action is determined directly by the operator turning steering wheel 11 to select the turning direction (right or left), the turning angle (how many degrees each wheel is to be turned with respect to an initial vertical wheel plane), and the speed with which the turning angle is reached.

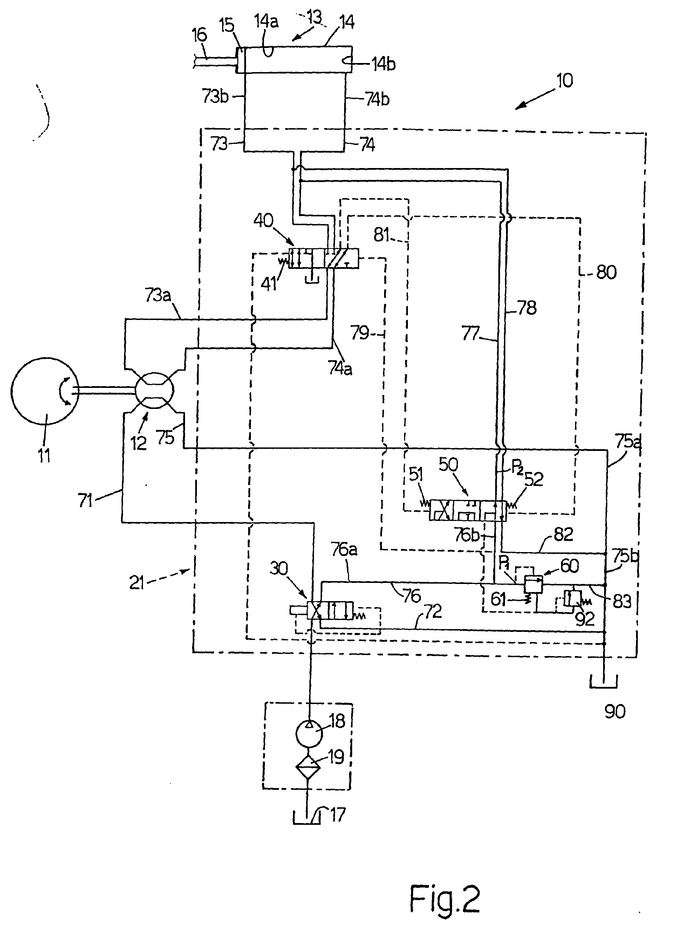

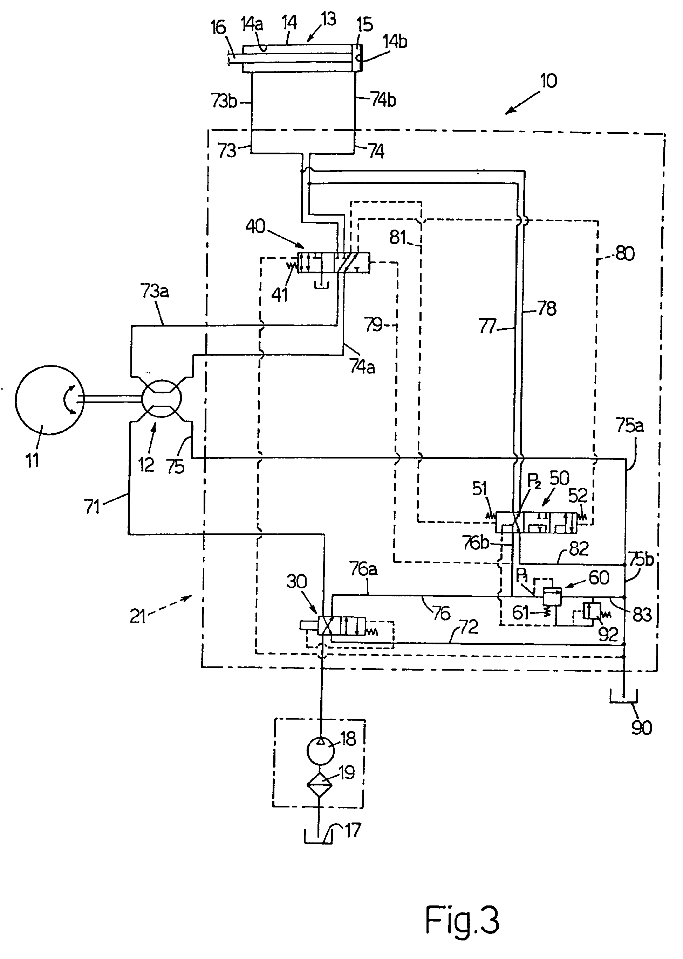

"Fast operating mode", on the other hand, is described with reference to Figures 2 and 3.

More specifically, when valve 30 is switched by the operator to the Figure 2 position, the pressurized oil, as opposed to flowing along conduit 71, flows along a conduit 76 comprising a portion 76a and a portion 76b and it is directed towards distributor 50, which in the present case is a hydraulic 5/3, i.e. five-way, three-position, valve. In the Figure 1 configuration, distributor 50 is shown in the "closed" position, i.e. cutting off pressurized oil flow from distributor 50 to device 13 along a conduit 77 or a conduit 78 for respectively supplying chamber 14b or chamber 14a. Since portion 76b of conduit 76 nevertheless remains under pressure, the pressure of the oil in this portion 76b can be used to push the change valve 40, in opposition to a spring 41, into the Figure 2 position. This is done using a pilot conduit 79, which, disregarding the load losses inherent to conduit 79, transmits the pressure of the oil in portion 76b of conduit 76 to the change valve 40 in order to move the spool in opposition to spring 41.

As shown in Figures 1 and 2, from change valve 40 extend two pilot conduits 80, 81, which determine the position of distributor 50 as described later on.

When change valve 40 is switched from the Figure 1 to the Figure 2 position, by switching valve 30 as described above, pilot conduit 80 is connected hydraulically to portion 74a of conduit 74, and pilot conduit 81 is simultaneously connected hydraulically to portion 73a of conduit 73.

Therefore, by acting on hydraulic steering motor 12 by means of steering wheel 11, it is possible to unbalance one way or the other the hydraulic circuit comprising conduits 74a, 80, 73a, 81, and force distributor 50 into the Figure 2 or Figure 3 position, in both cases overcoming the action of respective springs 51, 52 located on opposite sides of distributor 50.

In other words, once change valve 40 is switched to the Figure 2 or 3 position by the pressurized oil in drive conduit 79, the operator, using hydraulic steering motor 12, can mechanically pump oil into pilot conduit 81 (Figure 2) or into pilot conduit 80 (Figure 3) by turning steering wheel 11 one way or the other. Obviously, the spool of distributor 50 is shifted to the left in the Figure 2 configuration and to the right in the Figure 3 configuration.

In the Figure 2 configuration, oil flows along conduits 76, 77 and portion 74b of conduit 74 to supply chamber 14b of device 13. To permit leftward displacement of rod 16, the oil in chamber 14a of device 13 is fed back into tank 90 along portion 73b of conduit 73, along conduit 78, through distributor 50, and along a conduit 82 and portion 75b of conduit 75.

Similarly, as shown in Figure 3, chamber 14a of device 13 is supplied with oil by pump 18 to produce a rightward displacement of rod 16 by feeding the oil through valve 30 and along conduits 76, 78 and portion 73b of conduit 73. As before, the oil in chamber 14b of device 13 is fed back into tank 90 along portion 74b of conduit 74, along conduit 77, through distributor 50, and along conduit 82 and portion 75b of conduit 75.

To switch to "fast mode", therefore, the operator simply switches valve 30 from the Figure 1 to the Figure 2 and 3 position.

At this point, drive conduit 79 shifts the spool of the change valve 40 leftwards in opposition to spring 41, so as to activate pilot conduits 80, 81 to shift the spool of distributor 50 as determined by the operator using hydraulic steering motor 12 as a hydraulic pump.

Consequently, even when operating in "fast mode" (Figures 2, 3), the unbalance of the circuit comprising conduits 80, 81, portion 73a of conduit 73 and portion 74a of conduit 74, and so shift distributor 50 one way or the other to supply chamber 14a as opposed to chamber 14b of device 13, is still achieved using the mechanical pumping effect of hydraulic steering motor 12.

Even in "fast mode" (Figures 2, 3), therefore, it is possible to manually select the turning direction, turning angle, and the speed with which the turning angle is achieved. More specifically, the operator is able to vary the turning speed in proportion to the force exerted on the steering wheel. Otherwise said, an increase in torque on the steering wheel increases the pressure in pilot conduit 80 (or 81) and so increases the displacement of the spool of distributor 50 and hence oil flow to the steering cylinders.

In the Figure 2 and 3 configuration, the oil in conduit 75 is drained off into tank 90.

The main difference between "conventional mode" and "fast mode" is that, in "fast mode", as opposed to flowing through hydraulic steering motor 12, the oil pressurized by pump 18 is fed directly to actuating device 13 and only flows through distributor 50.

As already mentioned, system 10 further comprises a compensating device 60, which is none other than a "load sensing" device comprising a calibrating spring 61. Compensating device 60 detects the oil pressure at a point P₁, where the oil pressure is practically equal to that in conduit 76, i.e. upstream of distributor 50, and calculates the difference between this pressure at P₁ and the pressure at a point P₂ downstream of distributor 50. By maintaining a constant pressure difference over distributor 50, the maximum oil flow through distributor 50 is controlled so that the oil flow is unaffected by any pressure variations in device 13.

Using device 60, it is therefore possible to maintain constant oil flow to device 13 regardless of the instantaneous pressure conditions of device 13. Also, to protect circuit 21 against any overpressure when a fast turning is effected, a device 92 is provided to limit the pressure in delivery conduit 76 by draining any oil off into the tank 90. The relief valve for conventional steering is conventionally located inside hydraulic steering motor 12.

Valve 30 may be of any type and may be activated in any way, e.g. electrically, hydraulically, pneumatically, etc. Valve 30 may advantageously, though not necessarily, be activated by one or more push-buttons (not shown) on steering wheel 11.

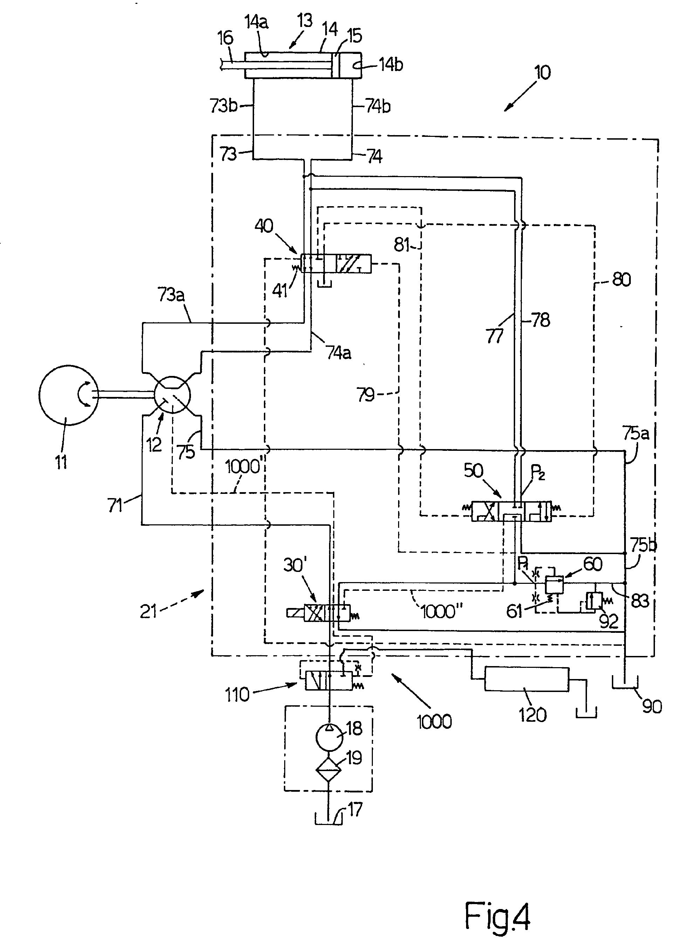

In a second embodiment shown in Figure 4, the fast-turn system is extended to a closed-center hydraulic steering motor 12 with a dynamic load sensing line 1000. In this embodiment, valve 30 of the first embodiment is replaced with an electrically activated, seven-way, two-position valve 30' to permit passage of dynamic load sensing line 1000. As will be recalled, valve 30 in Figures 1-3 was a four-way, two-position type valve.

To employ normal turn mode, dynamic load sensing line 1000 is switched to the closed-center hydraulic steering motor 12 by solenoid valve 30' (line 1000'). Conversely, to employ fast turn mode, line 1000 is switched to distributor 50 (line 1000").

In this case, the function of compensator 60 is performed by a priority valve 110, which also permits priority flow to closed-center hydraulic steering motor 12 with respect to secondary users 120. In the second embodiment shown in Figure 4, compensator 60 acts as a second stage of relief valve 92.

In a third embodiment shown in Figure 5, valve 30 is eliminated and between pump 18 and hydraulic steering motor 12, an open-center, six-way, three-position distributor 100 is installed, which, in neutral, provides for "normal turn" mode. The change valve 40, still located between hydraulic steering motor 12 and device 13, is activated electrically and, when energized, activates open-center distributor 100 by means of pilot conduits 80, 81 as described previously. This solution has the advantage of simplifying the hydraulic circuit by reducing the number of component parts, but fails to provide for effectively controlling the activation speed of device 13, on account of all the oil from pump 18 always flowing through distributor 100, and there being no system of compensation in relation to the load on user device 13. In short, what is achieved in "fast turn" mode is an extremely fast action on device 13 but with no possibility of controlling the activation speed.

Also, to protect circuit 21 against any overpressure, a device 2000 is provided to limit the pressure in delivery conduit 71, and which drains any oil off into a tank 3000.

To prevent "fast mode" from being inadvertently implemented by the operator at high vehicle speeds - which would render the system dangerous - split valve 30, or change valve 40 in the case of the second embodiment, may be controlled by an electronic central control unit (not shown), which prevents it from being activated at travelling speeds over and above a predetermined threshold.

The advantages of the system according to the present invention are as follows:

Steering is controlled at all times from the steering wheel, even in "fast mode".

The system is intrinsically safe, since "fast mode" is implemented only by first pushing a "fast mode" button and then turning the steering wheel. When the push-button is released, "normal turn" mode, still controlled from steering wheel 11, is restored instantaneously. Also, in the event of failure of pump 18 (emergency steering), spring 41 of change valve 40 and depressurization of drive conduit 79 ensure that manual emergency steering mode is restored.

In a preferred embodiment, "fast mode" can only be implemented at low vehicle speed under the control of an electronic control unit.

At least one "fast mode" activating button may advantageously, though not necessarily, be located on the steering wheel, or at any point in the cab within easy reach of the operator.

## Claims

1. A hydraulic steering system (10) comprising :
- first pumping means (18) for mechanically pumping a fluid from a tank;
- a hydraulic circuit (21) including :
- switching means (30, 40, 50) for selecting pressurized-fluid flows for selective supply to steering actuating means (13);
- second pumping means (12) regulated by steering means (11) activated by the operator in a conventional steering mode for selecting the turning direction, the turning angle, and the speed with which said turning angle is reached;
- fast-turning means (30; 40) activated by the operator for initiating a fast steering mode; in said fast steering mode the same steering means (11) being operable to select the turning direction, the turning angle, and the speed with which said turning angle is reached; and
**characterized in that** in said fast steering mode the steering speed is directly proportional to the operator force on the steering means (11).

2. A system (10) according to claim 1 **characterized in that** said second mechanical pumping means (12) comprise an open-center hydraulic steering control motor.

3. A system (10) according to claim 1, **characterized in that** said second mechanical pumping means (12) comprise a closed-center hydraulic steering control motor.

4. A system (10) according to any of the preceding claims, **characterized in that** the fast-turning means comprises a fast steering valve (30; 30') which is activated by selector means located on or in the vicinity of said steering means (11).

5. A system (10) according to claim 4, **characterized in that** said fast steering valve (30; 30') is located in said hydraulic circuit (21) inbetween said first pumping means (18) and said second pumping means (12).

6. A system (10) according to claim 4 and 5, **characterized in that** :
- in said conventional steering mode, said fast steering valve (30; 30') is positioned in a first position whereby pressurized fluid is directed from said first pumping means (18) to said second pumping means (12) and from there onwards to said steering actuating means (13); and
- in said fast steering mode, said fast steering valve (30; 30') is positioned in a second position whereby pressurized fluid is directed from said first pumping means (18) directly towards said steering actuating means (13) without passing through said second steering means (12).

7. A system (10) according to any of the preceding claims, **characterized in that** said hydraulic circuit (21) further comprises a change valve (40) and a distributor (50); the position of the spool of said distributor (50) being regulated by two pilot conduits (80, 81) extending from said change valve (40).

8. A system (10) according to claim 7 when appended to claims 4 to 6, **characterized in that** the position of the spool of said change valve (40) is regulated by means of a pilot conduit (79) in operative communication with said fast steering valve (30; 30').

9. A system (10) according to claim 7 when appended to claims 4 to 6, **characterized in that** the position of the spool of said change valve (40) is regulated by electrical, mechanical or pneumatic means in dependence on the state of said selector means.

10. A system (10) according to claims 7 to 9, **characterized in that** said change valve (40) is located in said hydraulic circuit (21) inbetween said second pumping means (12) and said steering actuating means (13).

11. A system (10) according to claims 7 to 10, **characterized in that** said distributor (50) is positioned in parallel with said second pumping means (12) inbetween said fast steering valve (30; 30') and said steering actuating means (13).

12. A system (10) according to claims 7 to 11, **characterized in that** pressurized-fluid flow through said distributor (50) is regulated by a compensating device (60).

13. A system (10) according to claims 1 to 3, **characterized in that** said system (10) further comprises:
- a valve (40) located inbetween said second pumping means (12) and said steering actuating means (13); and
- a distributor (100) operable to direct pressurized fluid to either said second pumping means (12) or said steering actuating means (13).

14. A system according to claim 13, **characterized in that** :
- in said conventional steering mode, said valve (40) is positioned by the operator in a first position whereby pressurized fluid is directed from said second pumping means (12) to said steering actuating means (13); and
- in said fast steering mode, said valve (40) is positioned by the operator in a second position whereby a pilot pressure is sent from said second pumping means (12) through pressure lines (80, 81) connected to said distributor (100) for controlling said distributor (100) to direct pressurized fluid to said steering actuating means (13).

15. A system (10) according to claims 13 and 14, **characterized in that** said distributor is a an open-center, six-way, three-position valve.

16. A system (10) according to any of the preceding claims, **characterized in that** said fast-turning means (30; 40) are controlled by an electronic control unit preventing said fast steering mode from being initiated by the operator at travelling speeds over a predetermined threshold.

17. A system (10) according to any of the preceding claims, **characterized in that** the system is a part of a hydraulic activating system of a tractor or earthmoving machine.

## Patentansprüche

1. Hydraulisches Lenksystem (10) mit:
- einer ersten Pumpeinrichtung (18) zum mechanischen Pumpen einer Flüssigkeit von einem Tank;
- einem Hydraulikkreis (21), der folgendes einschließt:
- Schalteinrichtungen (30, 40, 50) zur Auswahl von Druckströmungsmittel-Strömungen zur selektiven Zuführung an eine Lenk-Betätigungseinrichtung (13);
- zweite Pumpeinrichtungen (12), die durch Lenkeinrichtungen (11) geregelt werden, die von dem Fahrer in einer konventionellen Lenk-Betriebsart aktiviert werden, um die Lenk-Richtung, den Lenk-Winkel und die Geschwindigkeit auszuwählen, mit der dieser Lenk-Winkel erreicht wird;
- Schnell-Lenkeinrichtungen (30; 40), die von dem Fahrer aktiviert werden, um eine schnelle Lenk-Betriebsart einzuleiten; wobei in der schnellen Lenk-Betriebsart die gleichen Lenkeinrichtungen (11) betreibbar sind, um die Lenk-Richtung, den Lenk-Winkel und die Geschwindigkeit auszuwählen, mit der dieser Lenk-Winkel erreicht wird; und
- **dadurch gekennzeichnet, dass** in der schnellen Lenk-Betriebsart die LenkGeschwindigkeit direkt proportional zu der von dem Fahrer auf die Lenkeinrichung (11) ausgeübten Kraft ist.

2. System (10) nach Anspruch 1, **dadurch gekennzeichnet, dass** die zweiten mechanischen Pumpeinrichtungen (12) einen eine offene Mitte aufweisenden hydraulischen Lenk-Steuermotor umfassen.

3. System (10) nach Anspruch 1, **dadurch gekennzeichnet, dass** die zweiten mechanischen Pumpeinrichtungen (12) einen eine geschlossene Mittelstellung aufweisenden hydraulischen Lenk-Steuermotor umfassen.

4. System (10) nach einem der vorhergehenden Ansprüche, **dadurch gekennzeichnet, dass** die Schnell-Wende-Einrichtungen ein Schnell-Lenkventil (30; 30') umfassen, das durch Wähleinrichtungen aktiviert wird, die sich auf oder in der Nähe der Lenkeinrichtungen (11) befinden.

5. System (10) nach Anspruch 4, **dadurch gekennzeichnet, dass** das Schnell-Lenkventil (30; 30') sich in dem Hydraulikkreis (21) zwischen den ersten Pumpeinrichtungen (18) und den zweiten Pumpeinrichtungen (12) befindet.

6. System (10) nach den Ansprüchen 4 und 5, **dadurch gekennzeichnet, dass**:
- in der konventionellen Lenk-Betriebsart, das Schnell-Lenk-Ventil (30; 30') auf eine erste Position eingestellt ist, in der Druckströmungs-Flüssigkeit von der ersten Pumpeinrichtung (18) an die zweite Pumpeinrichtung (12) und von dieser weiter an die Lenk-Betätigungseinrichtung (13) gelenkt wird; und
- in der schnellen Lenk-Betriebsart das Schnell-Lenk-Ventil (30; 30') auf eine zweite Position eingestellt ist, wodurch Druckströmungs-Flüssigkeit von der ersten Pumpeinrichtung (18) direkt an die Lenk-Betätigungseinrichtung (13) ohne Durchlaufen der zweiten Lenkeinrichtung (12) gelenkt wird.

7. System (10) nach einem der vorhergehenden Ansprüche, **dadurch gekennzeichnet, dass** der Hydraulikkreis (21) weiterhin ein Umschaltventil (40) und einen Verteiler (50) umfasst, und dass die Position des Schiebers des Verteilers (50) durch zwei Pilot-Leitungen (80, 81) geregelt wird, die sich von dem Umschaltventil (40) aus erstrecken.

8. System (10) nach Anspruch 7 unter Rückbeziehung auf Ansprüche 4 bis 6, **dadurch gekennzeichnet, dass** die Position des Schiebers des Umschaltventils (40) mit Hilfe einer Pilot-Leitung (79) in betriebsmäßiger Verbindung mit dem Schnell-Lenk-Ventil (30; 30') geregelt wird.

9. System (10) nach Anspruch 7 unter Rückbeziehung auf Ansprüche 4 bis 6, **dadurch gekennzeichnet, dass** die Position des Schiebers des Umschaltventils (40) durch elektrische, mechanische oder pneumatischen Einrichtungen in Abhängigkeit von dem Zustand der Wähleinrichtung geregelt ist.

10. System (10) nach den Ansprüchen 7 bis 9, **dadurch gekennzeichnet, dass** das Umschaltventil (40) in den Hydraulikkreis (21) zwischen der zweiten Pumpeinrichtung (12) und der Lenkungs-Betätigungseinrichtung (13) angeordnet ist.

11. System (10) nach den Ansprüchen 7 bis 10, **dadurch gekennzeichnet, dass** der Verteiler (50) parallel zu der zweiten Pumpeinrichtung (12) zwischen dem Schnell-Lenk-Ventil (30; 30') und den Lenk-Betätigungseinrichtungen (13) angeordnet ist.

12. System (10) nach den Ansprüchen 7 bis 11, **dadurch gekennzeichnet, dass** die Druckflüssigkeits-Strömung durch den Verteiler (50) durch eine Kompensationseinrichtung (60) geregelt ist.

13. System (10) nach den Ansprüchen 1 bis 3, **dadurch gekennzeichnet, dass** das System (10) weiterhin folgendes umfasst:
- ein Ventil (40), das zwischen der zweiten Pumpeinrichtung (12) und der Lenk-Betätigungseinrichtung (13) angeordnet ist; und
- einen Verteiler (100), der zum Lenken von Druckflüssigkeit an entweder die zweite Pumpeinrichtung (12) oder die Lenk-Betätigungseinrichtung (13) betreibbar ist.

14. System (10) nach Anspruch 13, **dadurch gekennzeichnet, dass**:
- in der konventionellen Lenk-Betriebsart das Ventil (40) von dem Fahrer auf eine erste Position eingestellt wird, wodurch Druckflüssigkeit von der zweiten Pumpeinrichtung (12) an die Lenk-Betätigungseinrichtung (13) gelenkt wird; und
- in der Schnell-Lenk-Betriebsart das Ventil (40) von dem Fahrer auf eine zweite Position eingestellt wird, wodurch ein Pilot-Druck von der zweiten Pumpeinrichtung (12) über Druckleitungen (80, 81) gesandt wird, die mit dem Verteiler (100) verbunden sind, um den Verteiler (100) zum Lenken von Druckflüssigkeit an die Lenk-Betätigungseinrichtung (13) zu steuern.

15. System (10) nach Anspruch 13 und 14, **dadurch gekennzeichnet, dass** der Verteiler ein Sechsweg-Dreistellungs-Ventil mit offener Mittelstellung ist.

16. System (10) nach einem der vorhergehenden Ansprüche, **dadurch gekennzeichnet, dass** die Schnell-Wende-Einrichtungen (30; 40) durch eine elektronische Steuereinheit gesteuert werden, die die Initialisierung der Schnell-Lenk-Betriebsart durch den Fahrer bei Fahrgeschwindigkeiten oberhalb eines vorgegebenen Schwellenwertes verhindert.

17. System (10) nach einem der vorhergehenden Ansprüche, **dadurch gekennzeichnet, dass** das System einen Teil eines hydraulischen Aktivierungssystems eines Traktors oder einer Erdbewegungsmaschine ist.

## Revendications

1. Système de direction hydraulique (10) comprenant :
- des premiers moyens de pompage (18) pour le pompage mécanique d'un liquide à partir d'un réservoir ;
- un circuit hydraulique (21) comprenant :
- des moyens de commutation (30, 40, 50) pour sélectionner des débits de liquide sous pression pour l'alimentation sélective de moyens d'actionnement de direction (13) ;
- des deuxièmes moyens de pompage (12) régulés par des moyens de direction (11) actionnés par l'opérateur selon un mode de direction classique pour la sélection de la direction de braquage, de l'angle de braquage et de la vitesse à laquelle ledit angle de braquage est obtenu ;
- des moyens de braquage rapide (30; 40) actionnés par l'opérateur pour le lancement d'un mode de direction rapide ; dans ledit mode de direction rapide, les mêmes moyens de braquage (11) étant utilisables pour sélectionner la direction de braquage, l'angle de braquage et la vitesse à laquelle ledit angle de braquage est obtenu ; et
**caractérisé en ce que** dans ledit mode de direction rapide, la vitesse de direction est directement proportionnelle à l'effort exercé par l'opérateur sur les moyens de direction (11).

2. Système (10) suivant la revendication 1, **caractérisé en ce que** lesdits deuxièmes moyens de pompage mécanique (12) comprennent un moteur de commande de direction hydraulique à centre ouvert.

3. Système (10) suivant la revendication 1, **caractérisé en ce que** lesdits deuxièmes moyens de pompage mécanique (12) comprennent un moteur de commande de direction hydraulique à centre fermé.

4. Système (10) suivant l'une quelconque des revendications précédentes, **caractérisé en ce que** les moyens de braquage rapide comprennent une vanne de direction rapide (30, 30') qui est actionnée par des moyens de sélection disposés sur lesdits moyens de direction (11) ou au voisinage de ceux-ci.

5. Système (10) suivant la revendication 4, **caractérisé en ce que** ladite vanne de direction rapide (30; 30') est disposée dans ledit circuit hydraulique (21) entre lesdits premiers moyens de pompage (18) et lesdits deuxièmes moyens de pompage (12).

6. Système (10) suivant la revendication 4 et 5, **caractérisé en ce que** :
- dans ledit mode de direction classique, ladite vanne de direction rapide (30; 30') est positionnée dans une première position grâce à laquelle le liquide sous pression est dirigé desdits premiers moyens de pompage (18) vers lesdits deuxièmes moyens de pompage (12) et à partir de là vers lesdits moyens d'actionnement de la direction (13) ; et
- dans ledit mode de direction rapide, ladite vanne de direction rapide (30; 30') est positionnée dans une deuxième position grâce à laquelle le liquide sous pression est dirigé desdits premiers moyens de pompage (18) directement vers lesdits moyens d'actionnement de la direction (13) sans passer par lesdits deuxièmes moyens de direction (12).

7. Système (10) suivant l'une quelconque des revendications précédentes, **caractérisé en ce que** ledit circuit hydraulique (21) comprend également une vanne de changement (40) et un distributeur (50) ; la position de la bobine dudit distributeur (50) étant régulée par deux conduits pilotes (80, 81) provenant de ladite vanne de changement (40).

8. Système (10) suivant la revendication 7, lorsqu'elle se rapporte des revendications 4 à 6, **caractérisé en ce que** la position de la bobine de ladite vanne de changement (40) est régulée au moyen d'un conduit pilote (79) en communication opérationnelle avec ladite vanne de direction rapide (30; 30').

9. Système (10) suivant la revendication 7, lorsqu'elle se rapporte des revendications 4 à 6, **caractérisé en ce que** la position de la bobine de ladite vanne de changement (40) est régulée par des moyens électriques, mécaniques ou pneumatiques en fonction de l'état desdits moyens de sélection.

10. Système (10) suivant les revendications 7 à 9, **caractérisé en ce que** ladite vanne de changement (40) est disposée dans ledit circuit hydraulique (21) entre lesdits deuxièmes moyens de pompage (12) et lesdits moyens d'actionnement de la direction (13).

11. Système (10) suivant les revendications 7 à 10, **caractérisé en ce que** que ledit distributeur (50) est positionné en parallèle avec lesdits deuxièmes moyens de pompage (12) entre ladite vanne de direction rapide (30; 30') et lesdits moyens d'actionnement de la direction (13).

12. Système (10) suivant les revendications 7 à 11, **caractérisé en ce que** le débit de liquide sous pression à travers ledit distributeur (50) est régulé par un dispositif de compensation (60).

13. Système (10) suivant les revendications 1 à 3, **caractérisé en ce que** ledit système (10) comprend également :
- une vanne (40) située entre lesdits deuxièmes moyens de pompage (12) et lesdits moyens d'actionnement de la direction (13) ; et
- un distributeur (100) qui peut être commandé pour diriger le liquide sous pression vers lesdits deuxièmes moyens de pompage (12) ou lesdits moyens d'actionnement de la direction (13).

14. Système (10) suivant la revendication 13, **caractérisé en ce que**:
- dans ledit mode de direction classique, ladite vanne (40) est positionnée par l'opérateur dans une première position grâce à quoi le liquide sous pression est dirigé desdits deuxièmes moyens de pompage (12) vers lesdits moyens d'actionnement de la direction (13) ; et
- dans ledit mode de direction rapide, ladite vanne (40) est positionnée par l'opérateur dans une deuxième position grâce à quoi une pression pilote est envoyée desdits deuxièmes moyens de pompage (12) par le biais de conduites sous pression (80, 81) reliées audit distributeur (100) pour commander ledit distributeur (100) de manière à diriger le liquide sous pression vers lesdits moyens d'actionnement de la direction (13).

15. Système (10) suivant les revendications 13 et 14, **caractérisé en ce que** ledit distributeur est une vanne à six voies et à trois positions à centre ouvert.

16. Système (10) suivant l'une quelconque des revendications précédentes, **caractérisé en ce que** lesdits moyens de braquage rapide (30; 40) sont commandés par une unité de commande électronique empêchant ledit mode de direction rapide d'être initié par l'opérateur à des vitesses de déplacement supérieures à un seuil prédéterminé.

17. Système (10) suivant l'une quelconque des revendications précédentes, **caractérisé en ce que** le système fait partie d'un système d'actionnement hydraulique d'un tracteur ou d'une machine de terrassement.
